# FASCICULE DE BREVET EUROPEEN

(11) **EP 2 115 287 B1**
(45) Date de publication et mention de la délivrance du brevet: **04.07.2012**
(21) Numéro de dépôt: 08762029.0
(22) Date de dépôt: 01.02.2008
(51) Int. Cl.: F02D 41/06, F02N 11/08

(54) **PROCEDE DE CONTROLE D'UN SYSTEME DE DEMARRAGE/ARRET AUTOMATIQUE D'UN MOTEUR THERMIQUE D'UN VEHICULE, SYSTEME CORRESPONDANT ET SON UTILISATION**
VERFAHREN ZUM STEUERN DES AUTOMATISCHEN START- BZW. STOPPSYSTEMS DES WÄRMEMOTORS EINES FAHRZEUGS, ENTSPRECHENDES SYSTEM UND VERWENDUNG DAVON
METHOD FOR CONTROLLING THE AUTOMATIC START/STOP SYSTEM OF THE THERMAL ENGINE OF A VEHICLE, CORRESPONDING SYSTEM AND USE THEREOF

(30) Priorité: 07.02.2007 FR 0753111
(43) Date de publication de la demande: 11.11.2009
(73) Titulaire: Valeo Equipements Electriques Moteur, 94046 Créteil Cedex (FR)
(72) Inventeur: CORNIGLION, Cyrille, F-95140 Ermont (FR); TASPINAR, Ertugrul, F-94370 Sucy-En-Brie (FR)
(86) Numéro de dépôt international: PCT/FR2008/050169
(87) Numéro de publication internationale: WO 2008/104671

(56) Documents cités:
- WO-A-2004/091961
- US-A1- 2002 074 173
- US-A1- 2002 086 772

## Description

### DOMAINE TECHNIQUE DE L'INVENTION.

La présente invention concerne un procédé de contrôle d'un système de démarrage/ arrêt automatique d'un moteur thermique d'un véhicule.

L'invention concerne aussi ce même système, ainsi que son utilisation.

### ARRIERE PLAN TECHNOLOGIQUE DE L'INVENTION.

Des considérations d'économie d'énergie et de réduction de la pollution, surtout en milieu urbain, conduisent les constructeurs de véhicules automobiles à équiper leurs modèles d'un système de démarrage/ arrêt automatique, tel que le système connu sous le terme anglo-saxon de « Stop and Go ».

Ainsi que le rappelle la société VALEO EQUIPEMENTS ELECTRIQUES MOTEUR dans la demande de brevet FR2875549, les véhicules sont rendus aptes à fonctionner selon le mode « Stop and Go » grâce à une machine électrique réversible, ou alterno-démarreur, couplé au moteur thermique.

L'utilisation d'un alterno-démarreur dans un mode de fonctionnement « Stop and Go » consiste, sous certaines conditions, à provoquer l'arrêt complet du moteur thermique lorsque le véhicule est lui-même à l'arrêt, puis à redémarrer le moteur thermique à la suite, par exemple, d'une action du conducteur interprétée comme une demande de redémarrage.

Une situation typique de « Stop and Go » est celle de l'arrêt à un feu rouge. Lorsque le véhicule s'arrête au feu, le moteur thermique est automatiquement stoppé, puis, quand le feu devient vert, le moteur est redémarré au moyen de l'alterno-démarreur, comme suite à la détection par le système de l'enfoncement de la pédale d'embrayage par le conducteur, ou de toute autre action traduisant la volonté du conducteur de redémarrer son véhicule.

Pour ce faire, ainsi que l'indique également la société VALEO EQUIPEMENTS ELECTRIQUES MOTEUR dans la demande de brevet FR2875551, le système « Stop and Go » utilise des informations représentatives de l'état de fonctionnement du véhicule, informations provenant de capteurs du véhicule, tels que les capteurs de température de l'habitacle ou de détection de la position de la pédale d'embrayage, ou les informations lues sur un bus de communication de données, comme la vitesse du véhicule ou la vitesse de rotation du moteur.

Un tel système de démarrage/ arrêt automatique n'équipe à ce jour que les voitures particulières, mais on en comprend bien l'intérêt en terme d'économie d'énergie et de préservation de l'environnement, compte tenu des conditions de circulation en ville.

Cependant, une autre source de pollution est constituée par les moteurs diesel des véhicules utilitaires, notamment ceux des autobus et des autres véhicules de services.

Certaines municipalités ont donc adapté leurs flottes de véhicules à des carburants autres que le gas-oil, moins polluants, tels que le GPL, l'éthanol, ou même l'hydrogène.

Il reste qu'un autobus effectue de nombreux arrêts, et que le moteur consomme inutilement du carburant pendant les temps de montée et de descente des passagers.

Il est donc naturel d'envisager une installation d'un système de type « Stop and Go » afin de réduire la consommation moyenne de carburant d'un autobus.

Toutefois, un autobus, ainsi que certains poids lourds, présentent des systèmes de sécurité et d'aide à la conduite spécifiques que ne possèdent pas les véhicules de particuliers.

Le FAE, notamment, acronyme de « Frein d'Aide à l'Exploitation », est un système de freinage, qui permet de retenir le véhicule lorsque le conducteur relâche le pied du frein de service (le frein à pied) même avec une vitesse enclenchée.

Lors d'un arrêt au feu rouge, ou autre arrêt prolongé, le conducteur exerce généralement une pression importante sur la pédale de frein pour ne pas que le véhicule avance. Le FAE pallie cette obligation en serrant les freins, comme l'explique en détail le document US3905651, par exemple.

Il a aussi une autre fonction, dédiée au transport en commun: permettre le déverrouillage des portes arrière. En effet, le conducteur de bus ne peut déverrouiller les portes passagers sans activer le FAE.

Sur tous ces véhicules, le frein de sécurité est activé dès l'enclenchement du FAE.

Sur certains véhicules, il est même possible de pré-activer le FAE avant d'arriver sur l'arrêt. Ceci est très pratique pour éviter les pertes de temps, mais impose de connaître d'autre paramètres du véhicule pour autoriser l'arrêt du moteur thermique (par exemple: la vitesse véhicule...).

Le FAE permet également de faire retomber la boîte de vitesses automatique au point mort, pour éviter que celle-ci ne s'échauffe inutilement lors des phases d'arrêt.

Le FAE permet aussi d'éviter que des moments d'inattention du conducteur ne mènent à une catastrophe. Sur certains véhicules, quand le FAE est enclenché, même si le conducteur appuie sur l'accélérateur, il ne se passe rien, aucune commande n'est envoyée au calculateur.

Il permet de plus, sur certains autobus, de ralentir le véhicule sans pour autant que l'accélérateur ne soit lâché, ou encore de rigidifier les suspensions pneumatiques afin de sécuriser la descente ou la montée des passagers.

### DESCRIPTION GENERALE DE L'INVENTION.

La présente invention vise donc à adapter un système de « Stop and Go » connu de l'état de la technique à un véhicule muni d'un FAE.

Elle a précisément pour objet un procédé de contrôle d'un système de démarrage/ arrêt automatique d'un moteur thermique d'un véhicule du type de ceux utilisant des informations représentatives d'un état de fonctionnement du véhicule provenant de capteurs et d'un bus de communication de données, ces informations étant représentatives notamment de l'activation ou de la désactivation d'un frein d'aide à l'exploitation, d'une vitesse du véhicule et d'un appui ou d'un relâchement d'une pédale de frein du véhicule.

Ce procédé est remarquable en ce qu'une condition d'activation du démarrage du moteur thermique est validée en cas de relâchement de la pédale de frein et de désactivation du frein d'aide à l'exploitation, ou en cas de désactivation du frein d'aide à l'exploitation.

De préférence, une condition de coupure du moteur thermique est alors validée quand la vitesse du véhicule est inférieure à un seuil prédéterminé, et en cas d'appui sur la pédale de frein ou d'activation du frein d'aide à l'exploitation.

Le procédé selon l'invention est aussi remarquable en ce que les informations qu'il utilise sont représentatives de plus d'une vitesse de rotation du moteur du véhicule, et d'une coupure de ce moteur.

Une condition d'arrêt du moteur est alors de préférence validée lors de la coupure du moteur et quand la vitesse de rotation est nulle.

Alternativement, une condition de démarrage du véhicule est avantageusement validée quand la vitesse de rotation du moteur est égale à une vitesse de ralenti prédéterminée.

L'invention concerne également un système de démarrage/ arrêt automatique d'un moteur thermique d'un véhicule apte à la mise en oeuvre du procédé exposé ci-dessus, remarquable en ce qu'il comprend au moins un capteur de l'état du frein d'aide à l'exploitation.

Selon l'invention, le procédé et le système précédemment décrits sont avantageusement utilisés à bord d'un véhicule utilitaire, de préférence un véhicule de transport de passagers.

Ces quelques spécifications essentielles auront rendu évidents pour l'homme de métier les avantages apportés par l'invention par rapport à l'état de la technique antérieur.

Les spécifications détaillées de l'invention sont données dans la description qui suit en liaison avec le dessin ci-annexé. Il est à noter que ce dessin n'a d'autre but que d'illustrer le texte de la description et ne constitue en aucune sorte une limitation de la portée de l'invention.

### BREVE DESCRIPTION DU DESSIN.

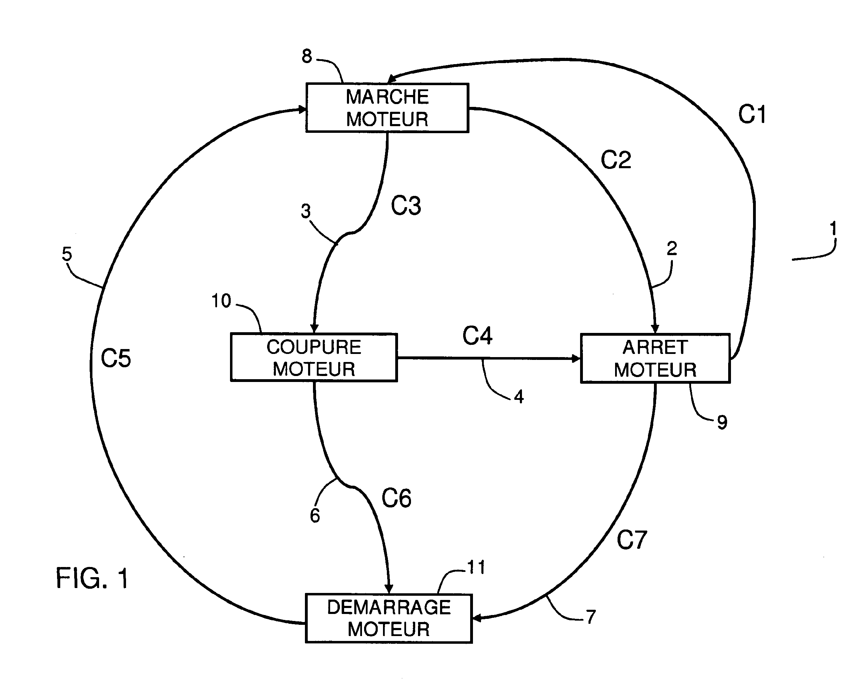

La Figure 1 est une modélisation par un graphe d'état du procédé de contrôle d'un système de démarrage/ arrêt automatique d'un moteur thermique d'un véhicule selon l'invention.

### DESCRIPTION DU MODE DE REALISATION PREFERE DE L'INVENTION.

Une stratégie mise en oeuvre par un système de démarrage/ arrêt automatique d'un moteur thermique d'un véhicule selon l'invention, représentée sur la Figure 1, a été simplifiée pour ne retenir que des transitions 1,2,3,4,5,6,7 entre quatre états :
- moteur en marche 8 :
- moteur arrêté 9 ;
- coupure du moteur 10 ;
- démarrage du moteur 11.

Les transitions 1,2,3,4,5,6,7 entre ces états 8,9,10,11 se produisent, si les conditions C1,C2,C3,C4,C5,C6,C7 spécifiées dans la Table I suivante sont validées (les symboles & et ll représentent respectivement un ET logique et un OU logique):

**Table I**

| | |
|---|---|
| C 1 | (Clé_contact) & (Autorisation_démarrage) |
| C 2 | (Clé_contact = FAUX) |
| C 3 | (Vitesse_véhicule < Seuil_autorisation_de_stop) & ((Appui_sur_pédale_de_frein) ll (Activation_du_FAE)) |
| C 4 | (Moteur_coupé) & (Vitesse_moteur = 0) |
| C 5 | (Vitesse_rotation_moteur ≥ Vitesse_de_ralenti) |
| C 6 | ((Retâchement_de_la_pédale_de_frein) & (Désactivation_du_FAE)) ll |
| | (Désactivation_du_FAE) |
| C 7 | ((Relâchement_de_la_pédale_de_frein) & (Désactivation_du_FAE)) ll |
| | (Désactivation_du_FAE) |

La première transition 1 correspond à la mise en marche du moteur 8 à l'initiative du conducteur, sans intervention de la fonction « Stop and Go ». Elle se produit si une première condition C1 est validée, c'est-à-dire si l'information représentative de l'état de la clé de contact indique que l'état actif est VRAI et que la variable d'état indiquant que le démarrage est possible est aussi VRAI.

La deuxième transition 2 correspond à l'arrêt du moteur 9 également à l'initiative du conducteur, sans intervention de la fonction automatique. Elle se produit si une deuxième condition C2 est validée, c'est-à-dire si au moins l'état actif de la clé de contact est FAUX.

La troisième transition 3 correspond à la coupure 10 automatique du moteur thermique par le système « Stop and Go ». Elle est se produit si une troisième condition C3 spécifiée dans la Table I ci-dessus est validée, en particulier si au moins le FAE est activé.

La quatrième transition 4 correspond à l'arrêt 9 automatique du moteur thermique par le système à la suite de la coupure du moteur 10. Elle se produit si une quatrième condition C4 spécifiée dans la Table I est validée.

La cinquième transition 5 correspond au démarrage du véhicule par le système après le démarrage du moteur 11. Elle se produit si une cinquième condition C5 spécifiée dans la Table I est validée.

Les sixième et septième transitions 6,7 correspondent à l'activation du démarrage automatique du moteur thermique par le système, soit après la coupure du moteur 10, soit après l'arrêt du moteur 9, respectivement. Elles se produisent si des sixième et septième conditions C6, C7 spécifiées dans la Table I sont validées, en particulier si au moins le FAE est désactivé.

Comme il va de soi, l'invention ne se limite pas au seul mode d'exécution préférentiel décrit ci-dessus.

Notamment, le graphe d'état du procédé selon l'invention pourra comporter des états, des transitions ou des variables supplémentaires de façon à adapter la modélisation à la complexité du système de démarrage/ arrêt automatique, et à celle du dispositif FAE.

L'invention embrasse donc au contraire toutes les variantes possibles de réalisation qui resteraient dans le cadre défini par les revendications ci-après.

## Revendications

1. Procédé de contrôle d'un système de démarrage/ arrêt automatique d'un moteur thermique d'un véhicule du type de ceux utilisant des informations représentatives d'un état de fonctionnement dudit véhicule provenant de capteurs et d'un bus de communication de données, lesdites informations étant représentatives notamment de l'activation ou de la désactivation d'un frein d'aide à l'exploitation (FAE), d'une vitesse dudit véhicule et d'un appui ou d'un relâchement d'une pédale de frein dudit véhicule, **caractérisé en ce qu'**une condition d'activation du démarrage (C6, C7) dudit moteur thermique est validée en cas de relâchement de ladite pédale de frein et de désactivation dudit frein d'aide à l'exploitation, ou en cas de désactivation dudit frein d'aide à l'exploitation.

2. Procédé de contrôle d'un système de démarrage/ arrêt automatique d'un moteur thermique d'un véhicule selon la revendication 1, **caractérisé en ce qu'**une condition de coupure (C3) dudit moteur thermique est validée quand ladite vitesse est inférieure à un seuil prédéterminé et en cas d'appui sur ladite pédale de frein ou d'activation dudit frein d'aide à l'exploitation.

3. Procédé de contrôle d'un système de démarrage/ arrêt automatique d'un moteur thermique d'un véhicule selon la revendication 1 ou 2 précédente, **caractérisé en ce que** lesdites informations sont représentatives de plus d'une vitesse de rotation dudit moteur, et d'une coupure dudit moteur.

4. Procédé de contrôle d'un système de démarrage/ arrêt automatique d'un moteur thermique d'un véhicule selon la revendication 3 précédente, **caractérisé en ce qu'**une condition d'arrêt (C4) dudit moteur est validée lors de ladite coupure dudit moteur et quand ladite vitesse de rotation est nulle.

5. Procédé de contrôle d'un système de démarrage/ arrêt automatique d'un moteur thermique d'un véhicule selon la revendication 3 précédente, **caractérisé en ce qu'**une condition de démarrage du véhicule (C5) est validée quand ladite vitesse de rotation est égale à une vitesse de ralenti prédéterminée.

6. Système de démarrage/ arrêt automatique d'un moteur thermique d'un véhicule apte à la mise en oeuvre du procédé selon l'une quelconque des revendications 1 à 5 précédentes, **caractérisé en ce qu'**il comprend au moins un capteur de l'état dudit frein d'aide à l'exploitation.

7. Utilisation du procédé selon l'une quelconque des revendications 1 à 5 précédentes, et du système selon la revendication 6, à bord d'un véhicule utilitaire, de préférence un véhicule de transport de passagers.

## Claims

1. Method for controlling an automatic start/stop system of a heat engine of a vehicle of the type of those that use information representative of a state of operation of said vehicle originating from sensors and from a data communication bus, said information being representative in particular of the activation or the deactivation of an operating assistance brake (FAE), of a speed of said vehicle and of a depression or a release of a brake pedal of said vehicle, **characterized in that** a condition for activation of the starting (C6, C7) of said heat engine is confirmed in the event of release of said brake pedal and of deactivation of said operating assistance brake, or in case of deactivation of said operating assistance brake.

2. Method for controlling an automatic start/stop system of a heat engine of a vehicle according to Claim 1, **characterized in that** a condition (C3) for switching-off of said heat engine is confirmed when said speed is below a predetermined threshold and in case of depression on said brake pedal or of activation of said operating assistance brake.

3. Method for controlling an automatic start/stop system of a heat engine of a vehicle according to the preceding Claim 1 or 2, **characterized in that** said information is representative of more than one speed of rotation of said engine, and of a switching-off of said engine.

4. Method for controlling an automatic start/stop system of a heat engine of a vehicle according to the preceding Claim 3, **characterized in that** a condition (C4) for stopping said engine is confirmed upon said switching-off of said engine and when said speed of rotation is zero.

5. Method for controlling an automatic start/stop system of a heat engine of a vehicle according to the preceding Claim 3, **characterized in that** a condition (C5) for starting the vehicle is confirmed when said speed of rotation is equal to a predetermined idling speed.

6. Automatic start/stop system of a heat engine of a vehicle capable of implementing the method according to any one of the preceding Claims 1 to 5, **characterized in that** it comprises at least one sensor of the state of said operating assistance brake.

7. Use of the method according to any one of the preceding Claims 1 to 5, and of the system according to Claim 6, on board a utility vehicle, preferably a passenger transport vehicle.

## Patentansprüche

1. Verfahren zur Steuerung eines automatischen Start/Stopp-Systems eines Verbrennungsmotors eines Fahrzeugs von der Art, die von Sensoren und von einem Datenübermittlungsbus kommende, für einen Betriebszustand des Fahrzeugs repräsentative Informationen verwendet, wobei die Informationen insbesondere für die Aktivierung oder die Deaktivierung einer Betriebshilfsbremse (FAE), für eine Geschwindigkeit des Fahrzeugs oder für ein Drücken oder Loslassen des Bremspedals des Fahrzeugs repräsentativ sind, **dadurch gekennzeichnet, dass** eine Aktivierungsbedingung des Starts (C6, C7) des Verbrennungsmotors im Fall des Loslassens des Bremspedals und der Deaktivierung der Betriebshilfsbremse, oder im Fall der Deaktivierung der Betriebshilfsbremse validiert wird.

2. Verfahren zur Steuerung eines automatischen Start/Stopp-Systems eines Verbrennungsmotors eines Fahrzeugs nach Anspruch 1, **dadurch gekennzeichnet, dass** eine Abschaltbedingung (C3) des Verbrennungsmotors wenn die Geschwindigkeit niedriger als eine vorbestimmte Schwelle ist und im Fall des Drückens auf das Bremspedal oder der Aktivierung der Betriebshilfsbremse validiert wird.

3. Verfahren zur Steuerung eines automatischen Start/Stopp-Systems eines Verbrennungsmotors eines Fahrzeugs nach dem vorhergehenden Anspruch 1 oder 2, **dadurch gekennzeichnet, dass** die Informationen außerdem für eine Drehgeschwindigkeit des Motors und für ein Abschalten des Motors repräsentativ sind.

4. Verfahren zur Steuerung eines automatischen Start/Stopp-Systems eines Verbrennungsmotors eines Fahrzeugs nach dem vorhergehenden Anspruch 3, **dadurch gekennzeichnet, dass** eine Stoppbedingung (C4) des Motors beim Abschalten des Motors und wenn die Drehgeschwindigkeit Null ist validiert wird.

5. Verfahren zur Steuerung eines automatischen Start/Stopp-Systems eines Verbrennungsmotors eines Fahrzeugs nach dem vorhergehenden Anspruch 3, **dadurch gekennzeichnet, dass** eine Startbedingung des Fahrzeugs (C5) validiert wird, wenn die Drehgeschwindigkeit gleich einer vorbestimmten Leerlaufdrehzahl ist.

6. Automatisches Start/Stopp-System eines Verbrennungsmotors eines Fahrzeugs, das für die Durchführung des Verfahrens nach einem der vorhergehenden Ansprüche 1 bis 5 geeignet ist, **dadurch gekennzeichnet, dass** es mindestens einen Sensor des Zustands der Betriebshilfsbremse enthält.

7. Verwendung des Verfahrens nach einem der vorhergehenden Ansprüche 1 bis 5 und des Systems nach Anspruch 6 an Bord eines Nutzfahrzeugs, vorzugsweise eines Personenverkehrsfahrzeugs.
